# EUROPEAN PATENT SPECIFICATION

(11) **EP 4 520 960 B1**
(45) Date of publication and mention of the grant of the patent: **18.02.2026**
(21) Application number: 23195802.6
(22) Date of filing: 06.09.2023
(51) Int. Cl.: F03D 13/10, B25B 29/02, B23P 19/06

(54) **ELONGATION TOOL FOR ELONGATING A THREADED ROD OR A BOLT OF A FLANGE CONNECTION**
VERLÄNGERUNGSWERKZEUG ZUM VERLÄNGERN EINER GEWINDESTANGE ODER EINES BOLZENS EINER FLANSCHVERBINDUNG
OUTIL D'ALLONGEMENT POUR ALLONGER UNE TIGE FILETÉE OU UN BOULON D'UN RACCORD À BRIDE

(43) Date of publication of application: 12.03.2025
(73) Proprietor: ADMEDE AB, 211 19 Malmö (SE)
(72) Inventor: Jagd, Lars, 211 15 Malmö (SE); Johst, Kenneth, 1970 Frederiksberg C (DK); Marinitsch, Gerald, 8401 Kalsdorf (AT)
(74) Representative: Schwarz & Partner Patentanwälte GmbH

(56) References cited:
- US-A1- 2018 333 812
- US-A1- 2019 299 344
- US-B2- 11 148 240

## Description

In the field of modern energy production, wind turbines play an essential part to provide renewable, sustainable, and clean energy for the energy market. Wind turbines comprise a tower, on which a rotor is mounted, which is connected to an electric generator. The tower can reach a height of 100 meters, 150 meters, or even more depending on the specific requirements resulting from, among others, the location of the wind turbine. The tower consists of several tube segments with a length of for instance 20 meters or 30 meters. These segments are connected by circular flange connections on each side of the tube segments. During erection of the wind turbine on site, the tube segments are fitted together and connected with the joint circular flange connections with bolts, nuts, and/or threaded rods. The main connection methods comprise either of a bolt with a fixed head on the lower side of the flange connection and a nut on the upper side of the flange connection, or a threaded rod with a nut on each side of the flange. Any references herein to bolts shall be understood to include both types of methods, i.e. both a bolt with fixed head and one nut and a threaded rod with two nuts. Therefore bolt and threaded rod will be used interchangeably for the purposes of the description of the invention, unless specifically mentioned that a feature or embodiment only refers to only bolts or only to nuts. Large quantities of threaded rods or bolts, typically in the hundreds, of large size are necessary to establish the required stiffness and strength of the connections. In order to achieve the appropriate defined stiffness and strength in the joints, all the bolts have to be tightened to a predefined pre-tension level referred to as the predefined clamping force.

This bolt tightening operation has previously been performed manually, using torque wrenches, elongation tools, or similar tools. The manual process is very labor-intensive, challenging with regards to health and safety of operators, and introduces the risk of errors as well as a risk or significant variance in the achieved bolt pre-tension loads. One of the main challenges when assembling wind turbines lies in achieving the specified clamping forces by either elongation or torque methodologies. The use of torque wrenches is problematic since rotation of a nut along an angled thread is an indirect way of pre-tensioning the bolt that introduces parasitic shear stresses in the bolt. This increases the variance in the achieved clamping force and furthermore creates a risk of damaging the thread or even of overstretching the bolt. Another method to achieve the necessary clamping forces lies in elongating the threaded rod or bolt by applying a stretching force to the threaded rod or bolt, using an elongation tool, and then fastening a lock nut on the bolt or threaded rod while the stretching force is still applied. Once this lock nut has been fastened, a significant clamping force will remain in the connection after release of the stretching force. By employing this method, very precisely defined clamping forces can be achieved.

An elongation tool according to the preamble of claim 1 is disclosed by document US 11 148 240 B2.

However, elongation tools according to the prior art suffer from certain disadvantages. They comprise thread engagement means which must be screwed onto the threaded rod or bolt, and which are then used to exert the stretching force on the threaded rod or bolt. This process of screwing on is however prone to errors. Due to the dimensions of the threaded rod or bolt and the weight of these thread engagement means, the thread engagement means may lock up with the thread of the threaded rod or bolt during this process, resulting in an imperfect or insufficient grip between these two components. When this happens, it is necessary to unscrew the thread engagement means from the threaded rod or bolt and restart the process. Furthermore, due to the weight of the thread engagement means and the elongation tool as a whole, the first few threads of the threaded rod or bolt have to resist high friction forces and high loads when the thread engagement means are screwed onto the threaded rod or bolt. This may lead to a damage of the threaded rod or bolt and/or the thread engagement means.

Furthermore, due to the friction forces between the bolt and the thread engagement means, the rotation of the thread engagement means may inadvertently cause the bolt to rotate together with the thread engagement means so that the thread engagement means is not properly attached to the bolt. In order to alleviate this issue, prior to the use of the elongation tool, bolts are often snug-tightened using rattle guns or similar devices. The snug tightening process of a bolt creates a small clamping force that secures contact and a certain friction level between the upper side of the lower nut/bolt head to the lower side of the flange as well as contact and a certain friction level between lower side of upper nut and upper side of flange. However, the snug tightening process is labor intensive and also problematic with regards to health and safety or workers due to the weight of the snug tightening devices and the vibrations created by them. Furthermore, snug tightening doesn't fully remove the risk of bolts rotating together with the thread engagement means

The technical problem of the present invention is therefore to alleviate these problems of the prior art.

This problem is solved by the provision of an elongation tool according to the subject matter of claim 1.

The elongation tool for elongating a threaded rod or a bolt of a flange connection according to the invention comprises rotatable thread engagement means and an expansion device. The thread engagement means are configured to be threaded onto the threaded rod or bolt, and the expansion device is connected to the thread engagement means and configured to exert a first force essentially perpendicular to and away from the flange connection onto the thread engagement means, when the thread engagement means are engaged with a thread of the threaded rod or bolt. According to the invention, the elongation tool furthermore comprises friction means configured to be brought into contact with the threaded rod or bolt and provide a friction between the friction means and the threaded rod or bolt when the thread engagement means are being threaded onto the threaded rod or bolt, and to arrest a rotational movement of the threaded rod or bolt.

By providing a friction or friction between the friction means and the threaded rod or bolt, the rotational movement of the threaded rod or bolt is arrested, and therefore the thread engagement means may be screwed onto the threaded rod or bolt, without the risk of loosening the pre tightened bolt connection, or the risk of misaligning the thread engagement means. The elongation tool according to the invention therefore reduces risk of bolts rotating. In addition, it reduces the need of or the amount of snug tightening of the bolts prior to commencement of the elongation tool tightening process.

According to a preferred embodiment of the elongation tool according to the invention, the friction means comprise a push element configured to apply a second force to the threaded rod or bolt directed essentially perpendicular to and in direction towards the flange connection. Hereby, the fri force may be increased. Preferably, the push element is arranged essentially in line with the thread engagement means and configured to apply the second force in line with and in direction towards the thread engagement means. This leads to an even higher friction being generated.

According to the preferred embodiment, the push element comprises a contact surface for interacting with the threaded rod or bolt, wherein the contact surface comprises a friction enhancing material. This also leads to an increased friction between the threaded rod or bolt and the friction means.

According to an alternative embodiment of the elongation tool according to the invention, the friction means may comprise a clamping unit configured to apply a clamping force to the threaded rod or bolt, when the thread engagement means are being threaded onto the threaded rod or bolt. This also leads to a high friction between the friction means and the threaded rod or bolt. Hereby, the clamping unit may clamp the threaded rod or bolt along a circumference of the threaded rod or bolt ensuring an even contact surface between the threaded rod or bolt and the friction means.

According to a further alternative embodiment, the friction means comprise a push element configured to apply a third force to the threaded rod or bolt directed essentially perpendicular to the length of the threaded rod or bolt. Hereby, the threaded rod or bolt may be forced into contact with an inner wall of a through hole of the flange connection, further increasing the friction forces available to counteract the turning of the threaded rod or bolt.

According to the preferred embodiment of the elongation tool according to the invention, the elongation tool comprises a coupling unit for coupling the elongation tool with the threaded rod or bolt. The coupling unit comprises a lowering unit configured to lower the thread engagement means onto the threaded rod or bolt and towards the flange connection, and a rotation unit configured to rotate the thread engagement means when the thread engagement means is lowered, with a rotational speed corresponding to a thread feed of the threaded rod or bolt. By matching the rotational speed of the thread engagement means with the lowering speed of the lowering unit and the thread feed of the threaded rod or bolt, an automatic matching of the thread engagement means and the threads of the threaded rod or bolt can be achieved. Hereby the friction between the thread engagement means and the threads of the threaded rod or bolt are reduced, and the thread engagement means easily screw onto the threaded rod or bolt. This reduces the possibility of damage to the thread engagement means and the threaded rod or bolt and reduces the risk of needing to unscrew the thread engagement means from the threaded rod or bolt and rescrew the thread engagement means onto the threaded rod or bolt in order to achieve sufficient thread engagement. Therefore, an almost weight-less thread engagement, with only a small vertical force being applied from the elongation tool to the thread is being provided.

According to the preferred embodiment of the elongation tool according to the invention, the coupling unit comprises a height compensation unit configured to support the thread engagement means. The height compensation unit comprises a free play along a lowering direction of the lowering unit, and the thread engagement means is displaceable along the free play of the height compensation unit, when the thread engagement means is supported by the height compensation unit. By providing a free play along the lowering direction, the elongation tool to the invention allows the thread engagement means to rotate freely for a certain period while lowering the thread engagement means onto the threaded rod or bolt. Hereby the thread of the threaded rod or bolt can match with the thread engagement means without exerting an excessive force on the uppermost thread of the threaded rod or bolt.

Preferably, the lowering unit comprises a linear motor. Alternatively, the lowering unit may also be realized by a mechanical arm connected to a series of gears or chain drives. Other mechanical means of realizing a lowering unit are obvious to the person skilled in the art. These options provide robust and stable means of propulsion.

The elongation tool according to the invention also preferably comprises a drive unit configured to move the elongation tool along the flange connection. Hereby the elongation tool can fasten all threaded rods or bolts of a flange connection automatically.

The elongation tool according to the invention preferably comprises a centering unit, which is configured to align a central axis of the thread engagement means with a central axis of the threaded rod or bolt. This prevents the thread engagement means from being cross threaded onto the threaded rod or bolt.

The expansion device of the elongation unit may comprise a hydraulic cylinder. The hydraulic cylinder provides the advantage of providing considerable force while still maintaining small external dimensions.

The elongation tool according to the invention may also comprise a lock nut fastening device, which is configured to fasten a lock nut screwed on the threaded rod or bolt, while the expansion device is exerting the first force onto the thread engagement means. This enables the elongation tool to fasten the lock nut while the threaded rod or bolt is in its elongated state. Hereby a precisely defined clamping force for the flange connection can be achieved.

The elongation tool according to the invention as well as preferred and alternative embodiments will be described hereinbelow with reference to the figures.
Figure 1 shows the elongation tool according to the invention in a frontal view.
Figure 2 shows a schematic side view of the elongation tool used in flange connection with a threaded rod and nuts.
Figure 3 shows a schematic side view of the elongation tool used in flange connection with a bolt and a nut.

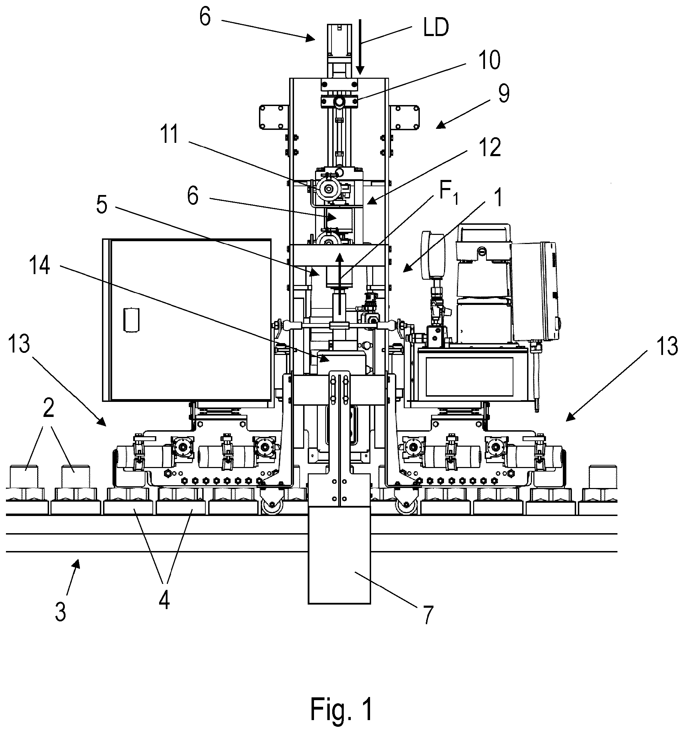

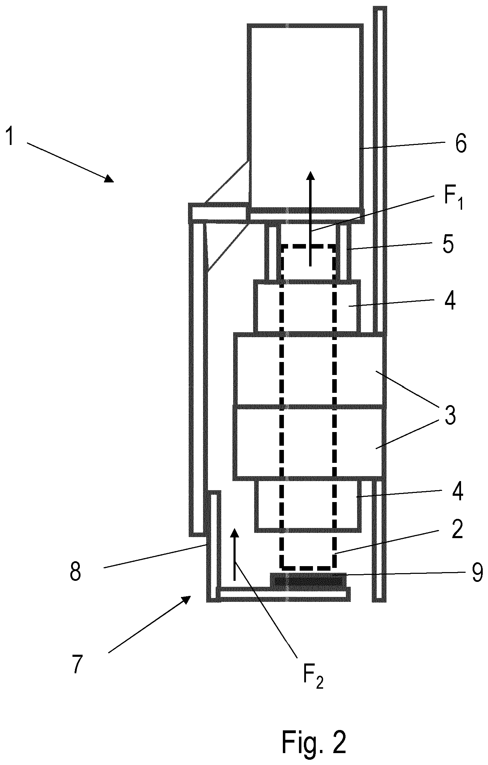

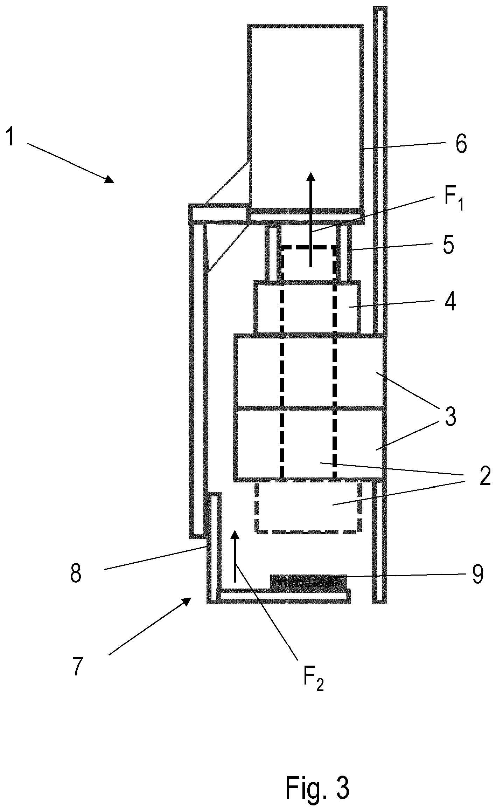

The elongation tool 1 for elongating a threaded rod or a bolt 2 of a flange connection 3 according to the invention is shown in a preferred embodiment in figure 1 in a frontal view. The flange connection 3 is held together by a series of threaded rods or bolts 2, wherein on each threaded rod upper and lower lock nuts 4 are fastened in order to achieve a predefined clamping force. In the case of bolts being used, a bolt head is arranged at the position pf the lower lock nut 4, as can be seen in figure 3, and only an upper lock nut 4 is used. The lower lock nut 4 of the bolt 2 is visible in figure 2. The elongation tool 1 comprises a rotatable thread engagement means 5 and an expansion device 6, wherein the thread engagement means 5 are configured to be threaded onto the threaded rod or bolt 2. In figure 1, the thread engagement means 5 are not engaged with the threads of a threaded rod or bolt 2, wherein in figure 2 and figure 3 the thread engagement means 5 are engaged with the threads of the threaded rod or bolt 2. The expansion device 6 is connected to the thread engagement means 5 and configured to exert a first force F₁ essentially perpendicular to and away from the flange connection 3 onto the thread engagement means 5, when the thread engagement means 5 are engaged with a thread of the threaded rod or bolt 2. The expansion device 6 comprises, according to the preferred embodiment of the elongation tool 1, a hydraulic cylinder. The hydraulic cylinder provides the advantage of providing considerable force while still maintaining small external dimensions.

The elongation tool 1 furthermore comprises friction means 7 configured to be brought into contact with the threaded rod or bolt 2 and provide friction between the friction means 7 and the threaded rod or bolt 2 when the thread engagement means 5 are threaded onto the threaded rod or bolt 2, and to arrest a rotational movement of the threaded rod or bolt 2. The friction means 8 can be connected to a cart or a robot, that carries the elongation tool 1 along the flange connection 4 and/or connected to any other suitable component of the elongation tool 1. In Figure 1 the friction means 7 are not visible in detail, as they are shown from a rear view. Figure 2 shows a schematic side view of the elongation tool 1 according to the invention, where the friction means 7 are visible in greater detail. In figure 2 and 3 the friction means 7 are not in contact with the threaded rod or bolt 2. By the provision of the friction means 7, a repeatable torque of the lock nuts 4 can be reached when tightening the flange connection 3. According to the preferred embodiment of the elongation tool 1 according to the invention, the friction means 7 comprise a push element 8, visible in figure 2 and 3, configured to apply a second force F₂ to the threaded rod or bolt 2 directed essentially perpendicular to and in direction towards the flange connection 3. Hereby, the friction force can be further increased, since the lower lock nut 4 is forced against the flange connection 3, and additional friction forces are generated between the threads of the lower lock nut 4 and the threaded rod or bolt 2. As can be seen in figure 2 and 3, the push element 8 is preferably arranged essentially in line with the thread engagement means 5 and configured to apply the second force F₂ in line with and in direction towards the thread engagement means 5. This reduces the risk of misaligning the threaded rod or bolt 2 and the thread engagement means 5. The friction means 7 prevents or reduces risk of rotation of the threaded rod or bolt 2 due to the force F₂ being applied between the friction means 7 and either the bolt head, as seen in figure 3 or the threaded rod as seen in figure 2. If the bolt head or the lower lock nut 4 is not in contact with the lower side of the flange connection 3, the elongation tool 1 according to the invention will enable a lifting of the bolt 2 or threaded rod and create friction between bolt head or the lower lock nut 4 and the flange connection 3. If a bolt 2 is used, this creates further resistance against rotation of the bolt 2. If a threaded rod is used, it will prevent or reduce the risk of the lower lock nut 4 rotating and thus loosen itself. It will also increase friction between the threaded rod and the lower lock nut 4 and thus reduce the risk of rotation.

In order to further increase the friction created between the threaded rod or bolt 2 and the friction means 7, the push element 8, according to the preferred embodiment shown in figure 2 and 3, comprises a contact surface 9 for interacting with the threaded rod or bolt 2, wherein the contact surface 9 comprises a friction enhancing material. The friction enhancing material may for example be provided in form of a rubber pad. In case of figure 3, the contact surface 9 makes contact with the bolt head of the bolt 2 during operation of the elongation tool 1.

According to an alternative embodiment of the elongation tool 1 according to the invention, not depicted in the figures, the friction means 7 may also comprise a clamping unit configured to apply a clamping force to the threaded rod or bolt 2, when the thread engagement means 5 are threaded onto the threaded rod or bolt 2. This also leads to a high friction between the friction means 7 and the threaded rod or bolt 2, depending on the provided clamping force. Hereby, the clamping unit may clamp the bolt 2 along a circumference of the bolt ensuring an even contact surface between the threaded rod or bolt 2 and the friction means 7.

According to another alternative embodiment of the invention, the friction means 7 may also comprise a push element 8 configured to apply a third force to the threaded rod or bolt 2 directed essentially perpendicular to the length of the threaded rod or bolt 2. This may be realized by a hydraulic or electromechanic element like a linear motor. Hereby, the threaded rod or bolt 2 may be forced into contact with an inner wall of a through hole of the flange connection 3, further increasing the friction forces available to counteract the turning of the threaded rod or bolt 2.

The elongation tool 1 also comprises according to the preferred embodiment, a coupling unit 9 for coupling the elongation tool 1 with the threaded rod or bolt 2. The coupling unit 9 is visible in figure 1. The coupling unit 9 comprises a lowering unit 10 configured to lower the thread engagement means 5 onto the threaded rod or bolt 2 and towards the flange connection 3. The lowering unit 10 may comprise a linear motor. Furthermore, a rotation unit 11 is provided configured to rotate the thread engagement means 5 when the thread engagement means 5 is lowered, with a rotational speed corresponding to a thread feed of the threaded rod or bolt 2. By matching the rotational speed of the thread engagement means 5 with the lowering speed of the lowering unit 10 and the thread feed of the threaded rod or bolt 2, an automatic matching of the thread engagement means 5, and the threads of the threaded rod or bolt 2 is achieved. This reduces the amount of friction between the thread engagement means 5 and the threads of the threaded rod or bolt 2, decreasing the risk of the threaded rod or bolt 2 being turned during this process.

The coupling unit 9 preferably also comprises a height compensation unit 12 shown in figure 1, which is configured to support the thread engagement means 5. The height compensation unit 12 comprises a free play along a lowering direction LD of the lowering unit 10, and the thread engagement means 5 are displaceable along the free play of the height compensation unit 12, when the thread engagement means 5 are supported by the height compensation unit 12. By providing a free play along the lowering direction LD of the lowering unit 10, the thread engagement means 5 may contact the threaded rod or bolt 2 on its upper end, oriented away from the flange connection 3, without being forced by the lowering unit 10 onto the thread of the threaded rod or bolt 2 immediately. Hereby the thread engagement means 5 can be rotated a certain degree while resting on the threaded rod or bolt 2, so that the threads of the threaded rod or bolt 2 and the threads of the thread engagement means 5 are aligned. This reduces the stress on the first thread of the threaded rod or bolt 2 greatly and reduces the risk of damaging the thread engagement means 5 or the threaded rod or bolt 2. The free play may be for example 8 mm, while usually 4 mm of this free play is used when the thread engagement means 5 are engaging the thread of the threaded rod or bolt 2.

The height compensation unit 12 may also comprise a free play measuring device, which is not shown in the figures, configured to stop or reduce a lowering speed of the lowering unit 10 once the thread engagement means 5 have been displaced for a predetermined distance along the free play. By measuring the distance along the free play which has been used by the thread engagement means 5, it can be assured that the thread engagement means 5 have correctly engaged the threads of the threaded rod or bolt 2. If more than the predetermined distance along the free play has been used, this means that the thread engagement means 5 have not engaged the threads, and either the elongation tool 1 is not correctly aligned with the threaded rod or bolt 2, or the threads of the threaded rod or bolt 2 or the thread engagement means 5 are damaged.

As can be seen in figure 1, the elongation tool 1 according to the invention preferably also comprises a drive unit 13 configured to move the elongation tool 1 along the flange connection 3. The preferred embodiment of the elongation tool 1 depicted in the figures comprises two drive units 13. The drive unit 13 may for example include a chain drive or a wheel drive. Other means of propulsion applicable to the drive unit 13 are generally known to the person skilled in the art. The drive unit 13 enables the elongation tool 1 according to the invention to operate autonomously and automatically place the elongation tool 1 above the threaded rods or bolts 2 to fasten a series of lock nuts 4 of the flange connection 3.

Preferably, the elongation tool 1 also comprises a centering unit, which is not shown in the figures, and which is configured to align a central axis of the thread engagement means 5 with a central axis of the threaded rod or bolt 2. Hereby the advantage is achieved, that cross threading of the thread engagement means 5 and the thread of the threaded rod or bolt 2 is avoided.

Also, the bolt elongation tool 1 may preferably comprise a lock nut fastening device 14, which is shown in figure 1 and is configured to fasten a lock nut 4 screwed on the threaded rod or bolt 2, while the expansion device 5 is exerting the force F₁ onto the thread engagement means 5. Hereby, the elongation tool 1 according to the invention can be used to simultaneously elongate the threaded rod or bolt 2 and fixate the threaded rod or bolt 2 with the lock nut 4.

## Claims

1. Elongation tool (1) for elongating a threaded rod or a bolt (2) of a flange connection (3) comprising a rotatable thread engagement means (5) and an expansion device (6), wherein the thread engagement means (5) are configured to be threaded onto the threaded rod or bolt (2), and the expansion device (6) is connected to the thread engagement means (5) and configured to exert a first force (F₁) essentially perpendicular to and away from the flange connection (3) onto the thread engagement means (5), when the thread engagement means (5) are engaged with a thread of the threaded rod or bolt (2),
**characterized in that**,
the elongation tool (1) comprises friction means (7) configured to be brought into contact with the threaded rod or bolt (2) and provide friction between the friction means (7) and the threaded rod or bolt (2) when the thread engagement means (5) are being threaded onto the threaded rod or bolt (2), and to arrest a rotational movement of the threaded rod or bolt (2).

2. Elongation tool (1) according to claim 1, **characterized in that** the friction means (7) comprise a push element (8) configured to apply a second force (F₂) to the threaded rod or bolt (2) directed essentially perpendicular to and in direction towards the flange connection (3).

3. Elongation tool (1) according to claim 2, **characterized in that** the push element (8) is arranged essentially in line with the thread engagement means (5) and configured to apply the second force (F₂) in line with and in direction towards the thread engagement means (5).

4. Elongation tool (1) according to any of claims 2 and 3, **characterized in that** the push element (8) comprises a contact surface (9) for interacting with the threaded rod or bolt (2), wherein the contact surface (9) comprises a friction enhancing material.

5. Elongation tool (1) according to claim 1, **characterized in that** the friction means (7) comprise a clamping unit configured to apply a clamping force to the threaded rod or bolt (2), when the thread engagement means (5) are threaded onto the threaded rod or bolt (2).

6. Elongation tool (1) according to claim 5, **characterized in that** the clamping unit clamps the bolt threaded rod or (2) along a circumference of the bolt threaded rod or (2).

7. Elongation tool (1) according to claim 1, **characterized in that** the friction means (7) comprise a push element (8) configured to apply a third force to the threaded rod or bolt (2) directed essentially perpendicular to the length of the threaded rod or bolt (2).

8. Elongation tool (1) according to any of claim 1 to 7, **characterized in that** the elongation tool (1) comprises a coupling unit (9) for coupling the elongation tool (1) with the threaded rod or bolt (2), wherein the coupling unit (9) comprises a lowering unit (10) configured to lower the thread engagement means (5) onto the threaded rod or bolt (2) and towards the flange connection (3), and a rotation unit (11) configured to rotate the thread engagement means (5) when the thread engagement means (5) are lowered, with a rotational speed corresponding to a thread feed of the threaded rod or bolt (2).

9. Elongation tool (1) according to claim 8, **characterized in that** the coupling unit (9) comprises a height compensation unit (12) configured to support the thread engagement means (5), wherein the height compensation unit (12) comprises a free play along a lowering direction (LD) of the lowering unit (10), and the thread engagement means (5) are displaceable along the free play of the height compensation unit (12), when the thread engagement means (5) are supported by the height compensation unit (12).

10. Elongation tool (1) according to any of claims 8 or 9, **characterized in that** the lowering unit (10) comprises a linear motor.

11. Elongation tool (1) according to claim 9, wherein the height compensation unit (12) comprises a free play measuring device configured to stop or reduce a lowering speed of the lowering unit (10) once the thread engagement means (5) have been displaced for a predetermined distance along the free play.

12. Elongation tool (1) according to any of claims 1 to 11, **characterized in that** the elongation tool (1) comprises a drive unit (13) configured to move the elongation tool (1) along the flange connection (3).

13. Elongation tool (1) according to any of claims 1 to 12, **characterized in that** the elongation tool (1) comprises a centering unit, which is configured to align a central axis of the thread engagement means (5) with a central axis of the threaded rod or bolt (2).

14. Elongation tool (1) according to any of claims 1 to 13, **characterized in that** the expansion device (6) comprises a hydraulic cylinder.

15. Elongation tool (1) according to any of claims 1 to 14, **characterized in that** the elongation tool (1) comprises a lock nut fastening device (14), which is configured to fasten a lock nut (4) screwed on the threaded rod or bolt (2), while the expansion device (6) is exerting the first force (F₁) onto the thread engagement means (5).

## Patentansprüche

1. Verlängerungswerkzeug (1) zum Verlängern einer Gewindestange oder eines Bolzens (2) einer Flanschverbindung (3), umfassend eine drehbare Gewindeeingriffseinrichtung (5) und eine Spreizvorrichtung (6), wobei die Gewindeeingriffseinrichtung (5) so konfiguriert ist, dass sie auf die Gewindestange oder den Bolzen (2) aufgeschraubt werden kann, und die Spreizvorrichtung (6) mit der Gewindeeingriffseinrichtung (5) verbunden und so konfiguriert ist, dass sie eine erste Kraft (F₁ ) im Wesentlichen senkrecht zu und weg von der Flanschverbindung (3) auf die Gewindeeingriffseinrichtung (5) ausübt, wenn die Gewindeeingriffseinrichtung (5) mit einem Gewinde der Gewindestange oder des Bolzens (2) in Eingriff steht,
**dadurch gekennzeichnet, dass**
das Verlängerungswerkzeug (1) Reibungsmittel (7) umfasst, die so konfiguriert sind, dass sie mit der Gewindestange oder dem Gewindebolzen (2) in Kontakt gebracht werden und eine Reibung zwischen den Reibungsmitteln (7) und der Gewindestange oder dem Gewindebolzen (2) erzeugen, wenn die Gewindeeingriffsmittel (5) auf die Gewindestange oder den Gewindebolzen (2) aufgeschraubt werden, und eine Drehbewegung der Gewindestange oder des Gewindebolzens (2) zu verhindern.

2. Verlängerungswerkzeug (1) nach Anspruch 1, **dadurch gekennzeichnet, dass** die Reibungsmittel (7) ein Druckelement (8) umfassen, das so konfiguriert ist, dass es eine zweite Kraft (F₂ ) auf die Gewindestange oder den Bolzen (2) ausübt, die im Wesentlichen senkrecht zu und in Richtung der Flanschverbindung (3) gerichtet ist.

3. Verlängerungswerkzeug (1) nach Anspruch 2, **dadurch gekennzeichnet, dass** das Druckelement (8) im Wesentlichen in einer Linie mit dem Gewindeeingriffsmittel (5) angeordnet und so konfiguriert ist, dass es die zweite Kraft (F₂ ) in einer Linie mit und in Richtung auf das Gewindeeingriffsmittel (5) ausübt.

4. Verlängerungswerkzeug (1) nach einem der Ansprüche 2 und 3, **dadurch gekennzeichnet, dass** das Druckelement (8) eine Kontaktfläche (9) zum Zusammenwirken mit der Gewindestange oder dem Gewindebolzen (2) umfasst, wobei die Kontaktfläche (9) ein reibungssteigerndes Material umfasst.

5. Verlängerungswerkzeug (1) nach Anspruch 1, **dadurch gekennzeichnet, dass** die Reibungsmittel (7) eine Klemmeinheit umfassen, die so konfiguriert ist, dass sie eine Klemmkraft auf die Gewindestange oder den Bolzen (2) ausübt, wenn die Gewindeeingriffsmittel (5) auf die Gewindestange oder den Bolzen (2) aufgeschraubt werden.

6. Verlängerungswerkzeug (1) nach Anspruch 5, **dadurch gekennzeichnet, dass** die Klemmeinheit die Gewindestange oder den Bolzen (2) entlang eines Umfangs der Gewindestange oder des Bolzens (2) klemmt.

7. Verlängerungswerkzeug (1) nach Anspruch 1, **dadurch gekennzeichnet, dass** die Reibungsmittel (7) ein Druckelement (8) umfassen, das so konfiguriert ist, dass es eine dritte Kraft auf die Gewindestange oder den Bolzen (2) ausübt, die im Wesentlichen senkrecht zur Länge der Gewindestange oder des Bolzens (2) gerichtet ist.

8. Verlängerungswerkzeug (1) nach einem der Ansprüche 1 bis 7, **dadurch gekennzeichnet, dass** das Verlängerungswerkzeug (1) eine Kupplungseinheit (9) zum Kuppeln des Verlängerungswerkzeug (1) mit der Gewindestange oder dem Bolzen (2) umfasst, wobei die Kupplungseinheit (9) eine Absenkeinheit (10) umfasst, die so konfiguriert ist, dass sie die Gewindeeingriffsmittel (5) auf die Gewindestange oder den Bolzen (2) und in Richtung der Flanschverbindung (3) absenkt, sowie eine Dreheinheit (11), die so konfiguriert ist, dass sie die Gewindeeingriffsmittel (5) dreht, wenn die Gewindeeingriffsmittel (5) abgesenkt werden, und zwar mit einer Drehgeschwindigkeit, die einem Gewindevorschub der Gewindestange oder des Bolzens (2) entspricht.

9. Verlängerungswerkzeug (1) nach Anspruch 8, **dadurch gekennzeichnet, dass** die Kupplungseinheit (9) eine Höhenausgleicheinheit (12) umfasst, die so konfiguriert ist, dass sie die Gewindeeingriffsmittel (5) stützt, wobei die Höhenausgleicheinheit (12) ein Spiel entlang einer Absenkrichtung (LD) der Absenkeinheit (10) umfasst, und die Gewindeeingriffsmittel (5) entlang des Spiels der Höhenausgleicheinheit (12) verschiebbar sind, wenn die Gewindeeingriffsmittel (5) von der Höhenausgleicheinheit (12) getragen werden.

10. Verlängerungswerkzeug (1) nach einem der Ansprüche 8 oder 9, **dadurch gekennzeichnet, dass** die Absenkeinheit (10) einen Linearmotor umfasst.

11. Verlängerungswerkzeug (1) nach Anspruch 9, wobei die Höhenausgleicheinheit (12) eine Spielmessvorrichtung umfasst, die so konfiguriert ist, dass sie die Absenkgeschwindigkeit der Absenkeinheit (10) stoppt oder verringert, sobald die Gewindeeingriffsmittel (5) um einen vorbestimmten Abstand entlang des Spiels verschoben worden sind.

12. Verlängerungswerkzeug (1) nach einem der Ansprüche 1 bis 11, **dadurch gekennzeichnet, dass** das Verlängerungswerkzeug (1) eine Antriebseinheit (13) umfasst, die so konfiguriert ist, dass sie das Verlängerungswerkzeug (1) entlang der Flanschverbindung (3) bewegt.

13. Verlängerungswerkzeug (1) nach einem der Ansprüche 1 bis 12, **dadurch gekennzeichnet, dass** das Verlängerungswerkzeug (1) eine Zentriereinheit umfasst, die so konfiguriert ist, dass sie eine Mittelachse der Gewindeeingriffseinrichtung (5) mit einer Mittelachse der Gewindestange oder des Bolzens (2) ausrichtet.

14. Verlängerungswerkzeug (1) nach einem der Ansprüche 1 bis 13, **dadurch gekennzeichnet, dass** die Expansionsvorrichtung (6) einen Hydraulikzylinder umfasst.

15. Verlängerungswerkzeug (1) nach einem der Ansprüche 1 bis 14, **dadurch gekennzeichnet, dass** das Verlängerungswerkzeug (1) eine Sicherungsmutter-Befestigungsvorrichtung (14) umfasst, die so konfiguriert ist, dass sie eine auf die Gewindestange oder den Bolzen (2) geschraubte Sicherungsmutter (4) befestigt, während die Expansionsvorrichtung (6) die erste Kraft (F₁ ) auf die Gewindeeingriffseinrichtung (5) ausübt.

## Revendications

1. Outil d'allongement (1) destiné à allonger une tige filetée ou un boulon (2) d'un raccord à bride (3) comprenant des moyens d'engagement de filetage rotatifs (5) et un dispositif d'expansion (6), les moyens d'engagement de filetage (5) étant conçus pour être vissés sur la tige filetée ou le boulon (2), et le dispositif d'expansion (6) étant relié aux moyens d'engagement de filetage (5) et étant conçu pour exercer une première force (F₁) sur les moyens d'engagement de filetage (5) sensiblement perpendiculairement au raccord à bride (3) et s'éloignant de celui-ci, lorsque les moyens d'engagement de filetage (5) sont engagés dans un fil de la tige filetée ou du boulon (2),
**caractérisé en ce que** l'outil d'allongement (1) comprend des moyens de friction (7) conçus pour être mis en contact avec la tige filetée ou le boulon (2) et pour assurer une friction entre les moyens de friction (7) et la tige filetée ou le boulon (2), lorsque les moyens d'engagement de filetage (5) sont vissés sur la tige filetée ou le boulon (2), et pour arrêter un mouvement de rotation de la tige filetée ou du boulon (2).

2. Outil d'allongement (1) selon la revendication 1, **caractérisé en ce que** les moyens de friction (7) comprennent un élément de poussée (8) conçu pour appliquer une deuxième force (F₂) à la tige filetée ou au boulon (2), dirigée sensiblement perpendiculairement vers le raccord à bride (3) et en direction de celui-ci.

3. Outil d'allongement (1) selon la revendication 2, **caractérisé en ce que** l'élément de poussée (8) est disposé sensiblement en ligne avec les moyens d'engagement de filetage (5) et est conçu pour appliquer la deuxième force (F₂) en ligne avec les moyens d'engagement de filetage (5) et en direction de ceux-ci.

4. Outil d'allongement (1) selon l'une quelconque des revendications 2 et 3, **caractérisé en ce que** l'élément de poussée (8) comprend une surface de contact (9) destinée à interagir avec la tige filetée ou le boulon (2), la surface de contact (9) comprenant un matériau améliorant la friction.

5. Outil d'allongement (1) selon la revendication 1, **caractérisé en ce que** les moyens de friction (7) comprennent une unité de serrage conçue pour appliquer une force de serrage à la tige filetée ou au boulon (2), lorsque les moyens d'engagement de filetage (5) sont vissés sur la tige filetée ou le boulon (2).

6. Outil d'allongement (1) selon la revendication 5, **caractérisé en ce que** l'unité de serrage serre la tige vissée avec le boulon ou (2) le long d'une circonférence de la tige vissée avec le boulon ou (2).

7. Outil d'allongement (1) selon la revendication 1, **caractérisé en ce que** les moyens de friction (7) comprennent un élément de poussée (8) conçu pour appliquer une troisième force à la tige filetée ou au boulon (2), dirigée sensiblement perpendiculairement à la longueur de la tige filetée ou du boulon (2).

8. Outil d'allongement (1) selon l'une quelconque des revendications 1 à 7, **caractérisé en ce que** l'outil d'allongement (1) comprend une unité de couplage (9) destinée à coupler l'outil d'allongement (1) à la tige filetée ou au boulon (2), la unité de couplage (9) comprenant une unité d'abaissement (10) conçue pour abaisser les moyens d'engagement de filetage (5) sur la tige filetée ou le boulon (2) et vers le raccord à bride (3), et une unité de rotation (11) conçue pour faire tourner les moyens d'engagement de filetage (5), lorsque les moyens d'engagement de filetage (5) sont abaissés, à une vitesse de rotation correspondant à l'alimentation en fil de la tige filetée ou du boulon (2).

9. Outil d'allongement (1) selon la revendication 8, **caractérisé en ce que** l'unité de couplage (9) comprend une unité de compensation de hauteur (12) conçue pour supporter les moyens d'engagement de filetage (5), la unité de compensation de hauteur (12) comprenant un jeu libre le long d'une direction d'abaissement (LD) de l'unité d'abaissement (10), et les moyens d'engagement de filetage (5) étant déplaçable le long du jeu libre de la unité de compensation de hauteur (12), lorsque les moyens d'engagement de filetage (5) sont supportés par l'unité de compensation de hauteur (12).

10. Outil d'allongement (1) selon l'une quelconque des revendications 8 ou 9, **caractérisé en ce que** l'unité d'abaissement (10) comprend un moteur linéaire.

11. Outil d'allongement (1) selon la revendication 9, dans lequel l'unité de compensation de hauteur (12) comprend un dispositif de mesure du jeu libre conçu pour arrêter ou réduire une vitesse d'abaissement de l'unité d'abaissement (10), une fois que les moyens d'engagement de filetage (5) ont été déplacés d'une distance prédéterminée le long du jeu libre.

12. Outil d'allongement (1) selon l'une quelconque des revendications 1 à 11, **caractérisé en ce que** l'outil d'allongement (1) comprend une unité d'entraînement (13) conçue pour déplacer l'outil d'allongement (1) le long du raccord à bride (3).

13. Outil d'allongement (1) selon l'une quelconque des revendications 1 à 12, **caractérisé en ce que** l'outil d'allongement (1) comprend une unité de centrage conçue pour aligner un axe central des moyens d'engagement de filetage (5) avec un axe central de la tige filetée ou du boulon (2).

14. Outil d'allongement (1) selon l'une quelconque des revendications 1 à 13, **caractérisé en ce que** le dispositif d'expansion (6) comprend un vérin hydraulique.

15. Outil d'allongement (1) selon l'une quelconque des revendications 1 à 14, **caractérisé en ce que** l'outil d'allongement (1) comprend un dispositif de fixation d'écrou de blocage (14) conçu pour fixer un écrou de blocage (4) vissé sur la tige filetée ou le boulon (2), tandis que le dispositif d'expansion (6) exerce une première force (F₁) sur les moyens d'engagement de filetage (5).
